# EUROPEAN PATENT APPLICATION

(11) **EP 4 513 407 A1**
(43) Date of publication of application: **26.02.2025**
(21) Application number: 23382875.5
(22) Date of filing: 25.08.2023
(51) Int. Cl.: G06Q 10/20

(54) **A METHOD AND SYSTEM FOR MONITORING VEHICLE COMPONENTS**

(71) Applicant: SITA Switzerland Sàrl, 1216 Cointrin Geneva (CH)
(72) Inventor: Bénain, Pierre-Yves, 1216 Cointrin (CH); Brito, Joao Paulo, 1216 Cointrin Geneva (CH)
(74) Representative: Reddie & Grose LLP

(57) **Abstract**

A method for monitoring status of one or more components of a vehicle is provided. The method comprises: retrieving one or more known identifiers associated with each of the one or more components of the vehicle; retrieving one or more requirements in relation to one or more physical conditions and/or one or more regulations associated with each of the identifiers; retrieving historical data relating to the one or more physical conditions and/or the one or one or more regulations associated with each of the identifiers; and aggregating the requirements and the historical data by components based on the known identifiers to form one or more sets of aggregated historical data, wherein each of the one or more sets of the aggregated historical data having the historical data associated with one of the one or more components of the vehicle; and determining, based on the one or more sets of the aggregated historical data associated with each of the components, if the each of the components meets the requirements associated with the each of the components. A corresponding system for performing the said method is also provided.

## Description

### FIELD OF THE INVENTION

This invention relates to monitoring component(s) of a vehicle, assembli(es) of the vehicle, and/or the vehicle. It is particularly, but not exclusively, concerned with monitoring component(s) of an aircraft, assembli(es) of the aircraft, and/or the aircraft in relation to various requirement(s), such as those concerning physical condition(s) and/or relevant regulation(s).

### BACKGROUND OF THE INVENTION

Maintaining satisfactory physical conditions of aircraft components is crucial for ensuring the airworthiness of aircrafts and safety of passengers and crew members. However, despite its importance, maintenance of aircraft components is subject to errors due to unreliable maintenance regimes conventionally used.

In particular, in view of the ever-increasing number of aircrafts operating globally, it is becoming increasingly challenging to correctly monitor if aircraft components meet the requirements that they need to meet for aircrafts to operate safely. This may lead to operators of aircrafts not being aware of their aircrafts lacking airworthiness, which may cause catastrophic consequences. Furthermore, in some cases, operators of aircrafts may also be forced to commission unnecessary, redundant maintenance work by losing track of earlier maintenance work performed on the same aircraft components.

Therefore, a method and a system that can enable aircraft operators to reliably monitor historical data associated with aircraft components are desirable.

### SUMMARY OF THE INVENTION

The invention is defined by the independent claims, to which reference should now be made. Preferred features are set out in the dependent claims.

In a first aspect of the invention, a method for monitoring status of one or more components of a vehicle is provided. The method comprises: retrieving one or more known identifiers associated with each of the one or more components of the vehicle; retrieving one or more requirements in relation to one or more physical conditions and/or one or more regulations associated with each of the identifiers; retrieving historical data relating to the one or more physical conditions and/or the one or one or more regulations associated with each of the identifiers; and aggregating the requirements and the historical data by components based on the known identifiers to form one or more sets of aggregated historical data, wherein each of the one or more sets of the aggregated historical data having the historical data associated with one of the one or more components of the vehicle; and determining, based on the one or more sets of the aggregated historical data associated with each of the components, if the each of the components meets the requirements associated with the each of the components.

Optionally, the method may further comprise, if it is determined that at least one of the components currently do not meet one or more of the requirements associated with the at least one of the components, generating a notification indicating that the at least one of the components do not meet the one or more of the requirements.

Optionally, the method may further comprise, if it is determined that at least one of the components are expected to no longer meet one or more of the requirements associated with the at least one of the components within a predetermined period of time, generating a notification indicating that the at least one of the components are expected to become non-compliant with the one or more of the requirements.

Optionally, the notification may comprise one or more of the identifiers of the at least one of the components that do not, or are expected not to meet the one or more of the requirements associated with the at least one of the components.

Optionally, the requirements may comprise one or more certifications that one or more organisations that perform manufacturing, distribution, inspection, maintenance and/or repair for the corresponding components are required to validly possess at the time of performing the manufacturing, distribution, inspection, maintenance, and/or repair.

Optionally, the requirements may comprise one or more of parameter(s) relating to one or more physical condition(s), lifespan and/or predetermined cycles of inspection, maintenance, and/or repair of the corresponding component(s).

Optionally, the requirements may comprise one or more of parameter(s) relating to one or more of inspection, maintenance, and/or repair that need to be performed in response to one or more events affecting the physical conditions of the corresponding component(s).

Optionally, the one or more events affecting the physical conditions may be one or more of: reported failure(s), defect(s), and/or malfunctioning of the corresponding component(s), and incidents that may cause failure(s), defect(s), and/or malfunctioning of the corresponding component(s).

Optionally, the historical data may comprise data relating to time(s) that one or more of manufacturing, distribution, inspection, maintenance and/or repair have been performed for the corresponding components.

Optionally, the historical data may comprise data relating to one or more certifications held by the organisation that performed one or more of manufacturing, distribution, inspection, maintenance and/or repair for the corresponding components.

Optionally, the data relating to each of the certifications may comprise: a name of the organisation to which the corresponding certification is issued, a name of entity by which the corresponding certification is issued, a time period during which the corresponding certification is valid, and details relating to one or more of manufacturing, distribution, inspection, maintenance and/or repair that the organisation is certified to perform on the corresponding components.

Optionally, the historical data may comprise details relating to past transactions of the corresponding components.

Optionally, a new unique identifier may be assigned to each group of the aggregated identifiers, the each group being made of identifiers associated with the same component.

Optionally, the one or more known identifiers may comprise identifier(s) issued and/or used by one or more of: manufacturer(s), operator(s), and organisations that are in charge of: manufacturing, distribution, inspection, maintenance and/or repair of the corresponding component(s).

Optionally, the method may further comprise sending the notification to one or more of: an owner of the vehicle, an operator of the vehicle, and/or one or more organisations that are in charge of: manufacturing, distribution, inspection, maintenance and/or repair of the corresponding component(s).

Optionally, one or more of the certifications may be retrieved from a database. Optionally, the database may be configured to allow one or more of the organisations to upload, modify, and/or delete one of more certifications they hold.

Optionally, the method may further comprise, if it is determined that all of the requirements of all components of an assembly are currently met, issuing a proof certifying that the assembly is suitable for operation, wherein the assembly is a part of the vehicle and comprising the all components of the assembly.

Optionally, the method may further comprise, if it is determined that all of the requirements of all components of the vehicle are currently met, issuing a proof certifying that the vehicle is suitable for operation.

Optionally, the vehicle may be an aircraft.

Optionally, the method may further comprise, if it is determined that all of the requirements of all components of an assembly are currently met, issuing a proof certifying that the aircraft is airworthy, wherein the assembly being a part of the aircraft and comprising the all components of the assembly.

Optionally, the method may further comprise, if it is determined that all of the requirements of all components of the aircraft are currently met, issuing a proof certifying that the aircraft is airworthy.

Optionally, the method may further comprise, if it is determined that one or more of essential components of the aircraft or an assembly of the aircraft do not, or are expected not to meet one or more of essential requirements associated with the essential components, generating an alert indicating that the aircraft or the assembly is not airworthy. The one or more essential components and the one or more essential requirements may be determined based on one or more inputs from one or more users associated with: owner(s) of the aircraft, the assembly and/or the corresponding essential components, an operator of the aircraft, and/or one or more organisations that are in charge of: manufacturing, distribution, inspection, maintenance and/or repair of the aircraft, the assembly and/or the corresponding essential components.

Optionally, the alert may comprise one or more of the identifiers of the one or more of the essential components that do not, or are expected not to meet the one or more of the essential requirements within a predetermined time.

In a second aspect of the invention, a system for monitoring status of one or more components of a vehicle is provided. The system comprises a data storage and a processor, the data storage comprising a computer program stored thereon. The processor is configured to run the computer program. The computer program is configured to perform the method for monitoring status of one or more components according to the first aspect of the invention.

### BRIEF DESCRIPTION OF THE DRAWINGS

An embodiment of the invention will now be described, by way of example only, and with reference to the accompanying drawings, in which:
Figure 1 illustrates an exemplary system for monitoring status of one or more components of a vehicle, according to an embodiment;
Figure 2 illustrates an exemplary certifications ledger, according to an embodiment;
Figure 3 illustrates an exemplary front-end page of a certifications ledger web interface, according to an embodiment;
Figure 4 illustrates an exemplary usage of a certifications ledger, according to an embodiment;
Figure 5 illustrates an exemplary process of user account creation and company claims approval on a certifications ledger, according to an embodiment;
Figure 6 illustrates an exemplary process of adding certificates on a certifications ledger where the user's organisation has certificates mentioned by authority's public web and listed in the certifications ledger, according to an embodiment;
Figure 7 illustrates an exemplary process of adding certificates on a certifications ledger where the user's organisation does not have certificates mentioned by authority's public web and listed in the certifications ledger, according to an embodiment;
Figure 8 illustrates an exemplary process of managing anomalies on a certifications ledger, according to an embodiment;
Figure 9 illustrates an exemplary UIN aggregator table, according to an embodiment;
Figure 10 illustrates an exemplary UIN aggregator process, according to an embodiment;
Figure 11 illustrates an exemplary reconciliation between parts ledger and other modules of the system, according to an embodiment;
Figure 12 illustrates an exemplary process of synchronisation between a parts ledger and other ledgers, according to an embodiment;
Figure 13 illustrates an exemplary process of associating a maintenance organisation's certifications with a parts ledger, according to an embodiment;
Figure 14 illustrates an exemplary passport tree, according to an embodiment; and
Figure 15 illustrates an exemplary process of back-to-birth validator scanning, according to an embodiment.

### DETAILED DESCRIPTION

The following exemplary description is based on a system and method for use in the aviation industry. However, it will be appreciated that the invention may find application outside the aviation industry and in any industry, such as in another travel or logistics industry, in which vehicle components are required to comply with certain requirements in relation to physical condition(s) and/or regulation(s) set by relevant organisation(s) such as government(s) and regulatory bodi(es). Thus, embodiments of the invention find application in the travel and transportation industry in general, such as rail, coach, car, vessel, as well for delivery and courier services.

As used herein, the term "vehicle" means equipment designed to transport people or cargo. Therefore, vehicles include, but are not limited to: wagons, bicycles, motor vehicles (motorcycles, cars, trucks, buses, mobility scooters for disabled people), railed vehicles (trains, trams), watercraft (ships, boats, underwater vehicles), amphibious vehicles (screw-propelled vehicles, hovercraft), aircraft (airplanes, helicopters, aerostats) and spacecraft.

For the purpose of the following discussion, the terms "component(s)" and "part(s)" may be used interchangeably.

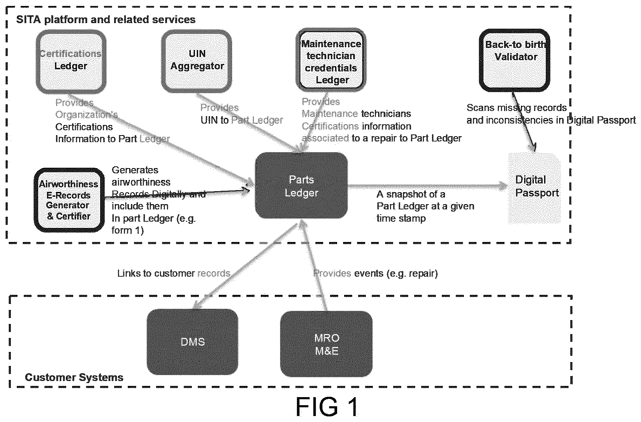

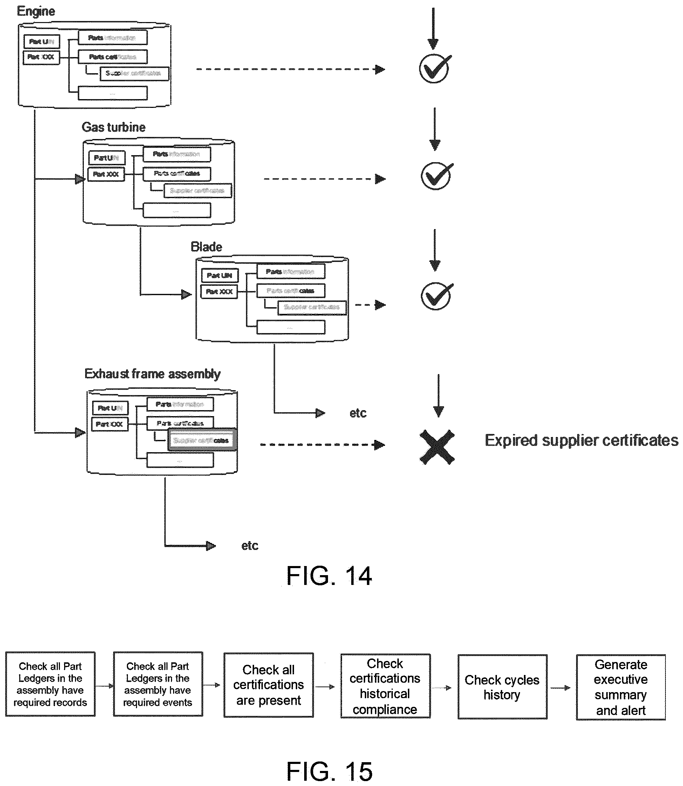

Embodiments of a method and a system for monitoring status of one or more components of a vehicle, such as an aircraft, and a system for performing the said method according to the present invention are described below in relation to Figure 1 to
Figure 15. Although the method and the system described below comprise a certifications ledger, a UIN aggregator, a parts ledgers, and one or more applications associated with them, it will be understood that, in other embodiments, the method and the system may be implemented in other ways. For example, the certifications ledger, the UIN aggregator, and the parts ledgers may be implemented using an integrated database, and/or implemented over one or more remote cloud-based and/or blockchain technology-based system. Similarly, the one or more applications associated with the certifications ledger, the UIN aggregator, and the parts ledgers may be run on any suitable forms and numbers of processing means.

Figure 1 illustrates an exemplary system for monitoring status of one or more components of a vehicle. The exemplary system shown in Figure 1 comprises software modules that are interrelated as illustrated. However it will be understood that the system of Figure 1 is provided as an example only, and in other embodiments, the system may be implement in any other suitable forms. The status may include airworthiness condition and/or regulatory compliance. In order to monitor the status of the one or more components of the vehicle, the system may retrieve a list of plurality of components of the vehicle. Such a list may be created by receiving one or more inputs by one or more users. For example, one or more of the components may be entered into the list based on one or more data inputs by an owner of the vehicle, an operator of the vehicle, and/or one or more organisations that are in charge of: manufacturing, distribution, inspection, maintenance and/or repair. In addition, or alternatively, such as list may be imported from another source such as a third-party databased. The components entered into such a list may be in forms of identifiers such as UINs, original part information, and/or other identifiers such as part numbers, serial numbers and manufacturer numbers (e.g. cage codes), part numbers (PNRs), serial number (SERs).

In relation to maintenance that may be performed on a part, an assembly, and/or a vehicle, the maintenance may be performed as per rating and scope of work. The rating may define which components(s) and/or assembli(es) (e.g. engine, auxiliary power unit, landing gear) a party is permitted to perform maintenance. The scope of work may define which type of vehicles (e.g. A320, B787) a party is permitted to perform maintenance. The scope of work may optionally be defined using ATA chapters (also known as "ATA 100 System Codes").

Similarly, one or more requirements in relation to one or more physical conditions and/or one or more regulations associated with each of the components may also be retrieved by receiving one or more inputs by one or more users and/or by importing from another source as described above. Such requirements may comprise requirements in relation to certifications and accreditations that one or more organisations need to possess. For example, one or more of the requirements may specify that organisation(s) that perform manufacturing, distribution, inspection, and/or maintenance for one or more of the components are required to possess one or more certifications and/or accreditations that are valid at the time of performing manufacturing, distribution, inspection, and/or maintenance of the corresponding components.

In addition, or alternatively, the one or more of the requirements may specify one or more of parameter(s) relating to one or more physical condition(s), lifespan and/or predetermined cycles of inspection, maintenance, and/or repair of the corresponding components. Additionally, such parameter(s) may also state if the corresponding part(s) are on-wing (i.e. mounted on a vehicle (e.g. aircraft)) or on-shelf (i.e. in storage).

In addition, or alternatively, the one or more of the requirements may specify one or more of parameter(s) relating to one or more of inspection, maintenance, and/or repair that need to be performed in response to one or more events affecting the physical conditions of the corresponding components. The one or more events affecting the physical conditions may be one or more of: reported failure(s), defect(s), and/or malfunctioning of the corresponding components, and incidents that may cause failure(s), defect(s), and/or malfunctioning of the corresponding components.

In the example shown in Figure 1, the system comprises a certifications ledger, in which data relating to such certifications and/or accreditations is stored. The certifications ledger may be a centralised database storing certification and/or accreditation history of one or more of the organisations that are in charge of manufacturing, distribution, inspection, and/or maintenance of the corresponding component. The certifications ledger may be accessed via an application having a web or app interface.

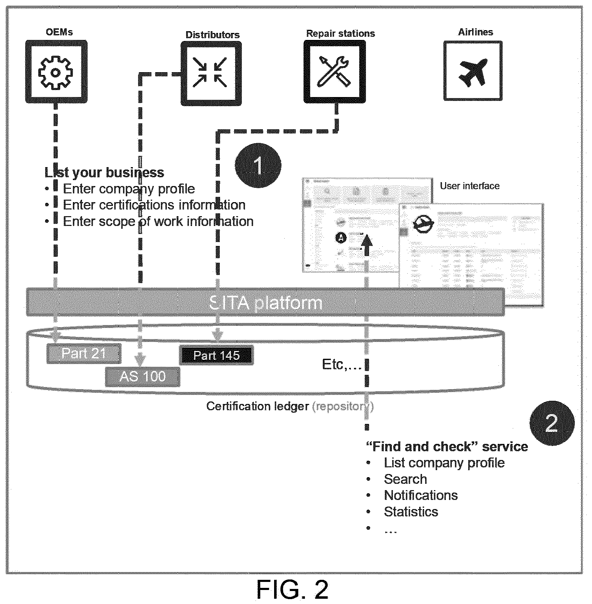

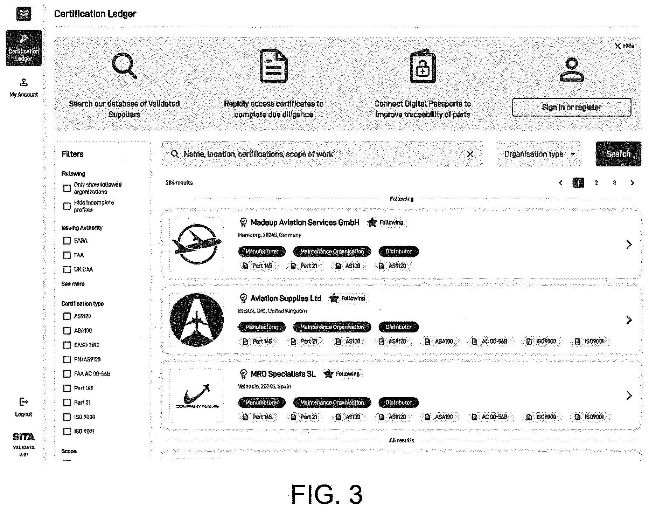

Figure 2 illustrates an exemplary certifications ledger according to an embodiment. As shown in Figure 2, organisations such as manufacturers (OEMs), airlines, maintenance organisations, repair stations, distributors, and/or suppliers may access the certifications ledger via a web or app interface. The organisations may therefore may browse the data in the certifications ledger, self-register to create and/or update organisation profile. The organisations may also upload and/or update certifications, and/or scope of work details. The certifications ledger may also allow the organisations and/or other parties (e.g. operators and/or owners of the vehicles) to subscribe to the certifications ledger to allow the subscribers to perform search on the ledger, retrieve statistics based on the data stored on the certifications ledger, receive notifications from the ledger (e.g. notifying new entri(es), deletion(s), expiration(s) and/or change(s) made to all or specific organisation(s), component(s) and/or vehicle(s)). Figure 3 illustrates an exemplary web interface front-end page of the certifications ledger.

Optionally, users of the certifications ledger may be given different levels of access to the certifications ledger. For example, as shown Figure 1, unregistered uses (free access) may only be allowed to browse and read basic information of the certifications ledger, and only registered company users may perform further tasks such as uploading certifications and scope of work.

**Table 1 Examples of functionalities provided to users with different levels of access**

| Functionality | Feature | How it works | |
|---|---|---|---|
| Free access | Anyone browsing from the internet can access the application and read basic information without being registered | The application has a pre-populated list of companies. | |
| | | This list is refreshed on a regular basis. | |
| | | | |
| | | The application allows visualising basic information on listed companies like company name, logo, basic corporate information and list of available certifications. | |
| | | | |
| | | No further details are visible to the user unless she/he is registered (and pays) | |
| | | | |
| Registration (user) | User registration and validation | The application automatically verifies the user email address. | |
| | | | |
| Registration (company) | User company claim | Once registered a user can claim a company listed in the application which means take control of a login/PW to upload information. | |
| | | The application will approve or reject company claim based on an algorithm described below (See below under SITA feature) | |
| | Register a listed company with corporate profile information | Once a company is claimed, the application allows registration of each company legal entity with the following information stored by SITA in a central data base: | |
| | | | • Logo |
| | | | • Description (free text entered by a user) |
| | | | • Type of services (Manufacturer, Maintenance Organisation, Distributor) |
| | | | • Scope of work. Details of the scope of work include specific permissions to perform repairs. FAA and EASA have their categorisations each. EASA and FAA have different categorisation. The application will implement both. |
| | | | • Upload of digital certifications and accreditations: The includes non-exhaustively AC 00-56B, AS 9120, ASA 100, EASA Part 145, FAA Part 145, EASA Part 21, FAA Part 21, ISO 9000, ISO 9001. |
| | | | • Detailed questionnaire (type of service, scope of work, ...) |
| | | The application keeps historical tracking of all information and information changes (Some of the corporate profile changes, past certificates, scope of work, expiration dates, ...) | |
| | Register a non-listed company with corporate profile information | This feature is "called" when a company is not listed for a claim in the application. For any organisation not listed and there is a contact form for SITA to manually process the registration with the user | |
| | Edit and change company profile | The application allows a user to edit and change its company profile. | |
| | | The application does not verify the changes unless these has been flagged by a user as an anomaly (See management of anomalies process). | |
| | | | |
| Search and find | Filter and sort current information | The application allows a user to sort and filter currently listed companies as per criteria in Organisations' profiles: | |
| | | | • Follow |
| | | | • Company type (OEM, Maintenance Organisation, ...) |
| | | | • Location |
| | | | • Scope of Work |
| | | | • Certifications |
| | | | • Accreditations |
| | | | • Priorities defined by the system |
| | Filter sort past information | The application allows a user to query on Organisation profile history (certifications, scope of work, other administrative details) including changes over a past time window | |
| | Follow/unfollow | The application allows a user to activate or deactivate a "follow button" to select companies of particular interest. The follow selection is part of the filter and sort criteria | |
| | View certifications and accreditations | The application allows a user to view certification and accreditations documents including historical certificates | |
| | Notifications and alerts - Select companies and be notified | The application allows a user to select a company of interest, configure criteria to receive automatically a notification on changes (e.g. change of corporate profile, certifications expiration, change in scope of work, ...) | |
| | Invite a partner to register | The application allows a registered user of a registered company to invite a nonregistered user of an unclaimed company to join. | |
| | | | |
| | | The application verifies that the "partner to invite" organisation is included in the official lists and then send a link for registration by email to the partner to invite. The partner to invite will follow the standard user and company claim registration process | |
| | Activity indicator | The application displays an indicator showing its level of activity. | |
| | | The activity indicators is built upon an aggregation of events such as monitoring visits, certificates downloads, company user visits | |
| | | | |
| Community management | Create a community | The application allows a user to create a community. A community can be closed (need permission to join) or open (anyone can join) | |
| | Invite partner company to a community | The application allows a member of a community to invite a company and its users to join the community | |
| | Exit a community | The application allows a member of a community to exit the community | |
| | Exchange messages within the community | The application allows point to point messages to be exchanged between members and well as broadcasted messages to be sent to all members of a community | |
| | | | |
| SITA administration | Approve a company claim | For Maintenance Organisations the application will verify if the company exists under EASA, FAA or any other related national agency. | |
| | | | |
| | | For Suppliers/Distributors the application will verify if the company exists under ASA web site. | |
| | | | |
| | | For Manufacturers (OEMs) there is no equivalent listed Manufacturers (OEMs). Therefore SITA will create and maintain its own list/DataBase by entering manually all OEM organisations sourcing information from different places such as from Aircraft IPCs. (Airbus A320, Boeing 37 etc...). https://www.wearepartspurchasing.com/civil-aviation/manufacturer/ Or even purchasing external data from Cirium and/orAviation Week market places See company claim approval process | |
| | Management of anomalies | See management of anomaly process below | |
| | Certifications verifications | See certification verification process below | |
| | Statistics | The application will create statistics. (For further definition in the roadmap) | |

Thus, the certifications ledger may provide means for collecting and verifying organisational historical certification information based on one or more users' inputs, and reduces risks for parts quarantine.

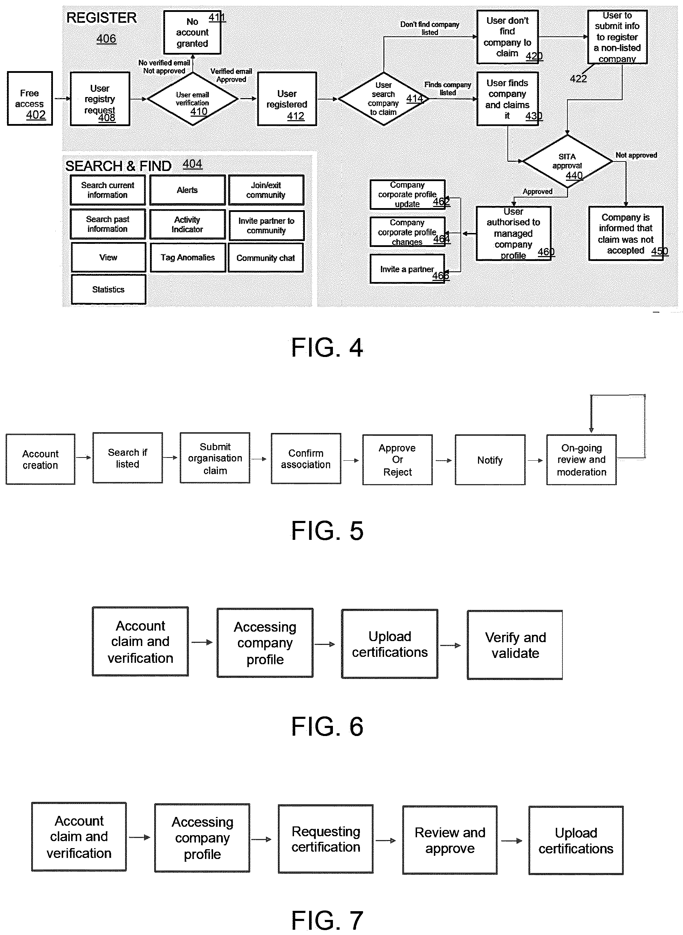

Figure 4 illustrates an exemplary usage of the certifications ledger according to an embodiment. As shown in Figure 4, the certifications ledger may allow anyone browsing from the internet to access the certifications ledger and read basic information without registration (free access 402). The certifications ledger may have a web or app interface via which visualised basic information of listed companies (e.g. company name, logo, basic corporate information and list of available certifications) to be viewed. The certifications ledger interface may require users to register and/or make payment in order to allow access to further functions and information.

As shown in Figure 4, a user may register 406 by, firstly, creating an account on the certification ledger interface. The account creation process may begin when the user submits a registry request 408. The account creation process may include email verification 410 which may be carried out automatically. If the user's email is verified, the user's registry request is approved, and the user is registered 412. If the user email is not or cannot be verified, no account may be granted 411 to the user.

Figure 5 illustrates an exemplary process of user account creation and company claims approval on a certifications ledger application according to an embodiment. The certifications ledger application may have access to certifications ledgers relating to the vehicle's components which may be stored in a data storage. The certifications ledgers appplication may be run on one or more processors included in and/or communicatively connected to the system. Such processor(s) may optionally be shared with other parts of the system, such as a UIN aggregator and a parts ledger application described below. The interaction between the application and the user may be performed via the web and/or app interface. The user, once registered, may view the further information only available to registered users. Furthermore, as shown in Figure 4 and Figure 5, the registered user may search and claim 414, 430 one or more organisations that the user is associated with on the certifications ledger. Scenario 1 below describes an examplery process for the registered user to claim an organisation that is already listed on the certifications ledger.

### Scenario 1 - User's organisation is listed on the certifications ledger application

1. User searches for an organisation to claim: The user searches 414 for the organisation to be claimed if it is listed.
2. User submits an organisation claim: The user, after registering, initiates the process by submitting a claim 430 for an organisation related to vehicle (e.g. aircraft) components and parts business (e.g. distributor/suppliers, maintenance organisations and/or OEM/manufacturer). This claim indicates the user's desire to manage the organisation's information and upload relevant certifications.
3. Confirmation of user's association with the organisation: The certifications ledger application has an automated method for initial validation to verify if a user can be associated to a specific organisation. Such an automated validation may be performed by any suitable application(s) and/or computer program(s) provided and/or operated by an administrator. In the example shown in Figure 4, the administrator is SITA. However, the administrator, in other embodiments, may be any parti(es) in charge of providing and/or operating the certifications ledger and/or one or more systems that include the certifications ledger. In case the automated method cannot validate the user's association, the request is forwarded to the administrator for manual verification of the user's association with the claimed organisation. This manual process may request additional documentation and/or contact the organisation directly to confirm the user's affiliation and/or authorisation to manage the organisation's information.
4. Approval or rejection of the claim: If the initial verification by the automated method is accepted, the users can manage the company information. If the initial verification by the automated method is not accepted, the claim is forwarded to the system administrator. Based on available information and/or additional information request by the administrator, the certifications ledger application's administrators may decide 440 to either approve or reject the user's claim. If approved, the user is granted access to manage 460 the organisation's information and upload relevant certificates. If rejected, the user is notified 450 of the decision. The notified decision may include an explanation for the rejection.
5. Notification to the user: Regardless of the decision, the user is notified via email or within the certifications' ledger application about the status of her/his claim. If approved, the notification includes instructions on how to proceed with managing the organisation's information and uploading certificates. If rejected, the notification provides reasons for the rejection and any further steps that may be required.
6. Ongoing review and moderation: As shown in Figure 5, the certifications ledger application may continue to periodically monitor and moderate the claimed organisations and user activities. Other users may report misplaced information which the administrator may periodically review the uploaded certificates and organisation information to ensure accuracy and compliance with certifications' requirements. Also, the certifications ledger application may periodically verify if the organisation is still listed by the relevant certification authority such as FAA, EASA, ASA among others.

If the one or more organisations that the user is associated is not listed 420 on the certifications' ledger, the user may submit information of the one or more organisations to register 422 them on the certifications ledger. Scenario 2 below describes an examplery process for the registered user to claim an organisation that is not already listed on the certifications ledger.

### Scenario 2 - Company is not listed on the certifications' ledger application

1. User reports to administrator (e.g. SITA): The user reports to SITA that the organisation is missing from the repository providing the organisation information.
2. Administrator reviews the request:
   a. If approved, SITA admin adds the organisation to the certifications ledger application central database and user has to follow steps listed in Scenario 1 in this section above.
   b. If not approved, SITA admin responds to the user request (optionally with a reason for rejection) and user will not be able to claim the organisation.

By following such a user organisation claim approval process, the certifications ledger repository system may ensure that only authorised individuals are able to manage and update information for certified organisations and maintain integrity and reliability of certifications ledger repository data.

Figure 6 illustrates an exemplary process of adding certificates on the certifications ledger according to an embodiment. The process of adding a certification to a company profile may vary depending on whether the certifications ledger has already identified that the company has one or more of its certificates mentioned by one of more relevant authority's public web site(s) and listed in the certifications' ledger or not. Scenario 3 below describes an examplery process for adding certificates on the certifications ledger where the user's organisation already has a certificate mentioned by authority's public web and listed in the certifications ledger.

### Scenario 3: User's organisation already has a certificate mentioned by authority's public web and listed in the certifications ledger

1. Accessing organisation profile: Once the account claim is approved and the user is granted for access to its organisation profile management interface, the user can navigate to the section dedicated to certifications.
2. Uploading a certification: In this scenario, since the organisation is already identified as having a specific certification (e.g. ASA-100, EASA or FAA part 145), the user may provide additional details and upload a digital version of the certification. This can, for example, be done by selecting the "Add Certificate" option on the specific certificate and following instructions to upload certification digital file or enter the relevant information.

Scenario 4 below describes an examplery process for adding certificates on the certifications ledger where the user's organisation does not have certificates mentioned by authority's public web and listed in the certifications ledger.

### Scenario 4: User's organisation does not have certificates mentioned by authority's public web and listed in the certifications ledger

1. Accessing organisation profile: As in the scenario 3, once the account claim is approved and the user is granted for access to its organisation profile management interface, the user can navigate to the section dedicated to certifications.
2. Uploading a certification: In this scenario, the company has no certificate listed on "Certificates" section. Therefore, the user may use "Upload a new certificate" function and follow instructions to upload digital file of the certification or enter the relevant information.
3. Review and approval: After submitting a certification request, the application may go through a review and approval process. This may involve manual verification or validation by the administrators or relevant authorities. The user may be notified of the status of its certificate request.
4. Uploading the certification: Once a certification request is approved, the user may receive instructions on how to add a certification. User may then upload certifications to the company profile by following the steps outlined in scenario 3.

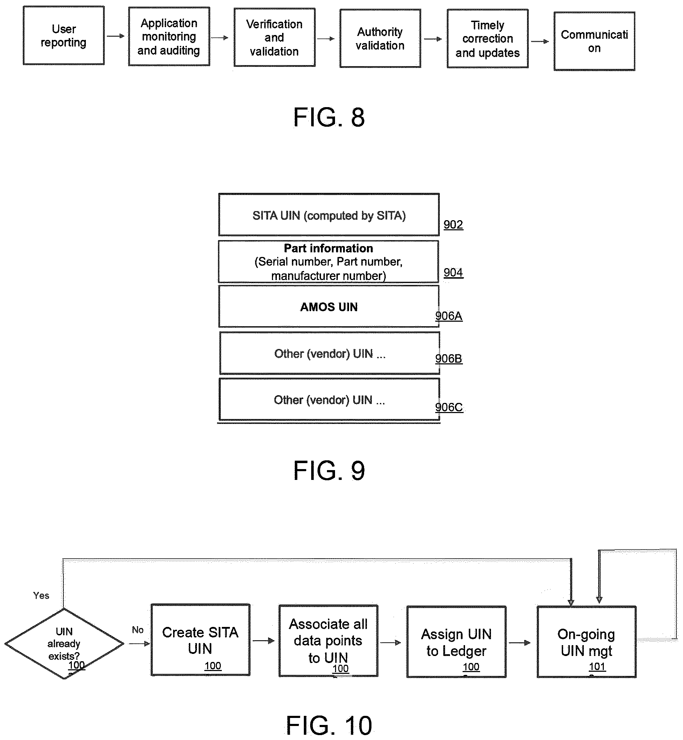

Figure 8 illustrates an exemplary process of managing anomalies on the certifications ledger according to an embodiment. Detecting and managing anomalies and erroneous information in the application against company profiles and its certificates is important for ensuring accuracy, reliability, and trust in the certifications ledger by its users. Scenario 5 below describes an examplery process for detecting and managing anomalies process.

### Scenario 5: Detection and management of anomalies

1. User reporting: A user reporting mechanism allows users to flag any anomalies or incorrect information they come across. This may be accomplished by providing a dedicated reporting button or form within the interface of the certifications ledger. Users may be encouraged to provide specific details about the anomaly, such as erroneous information on a company profile, the nature of the problem, and any supporting evidence or documentation.
2. Application monitoring and auditing: Robust monitoring and auditing mechanisms may be employed to detect anomalies and identify potential errors. This may involve automated checks and algorithms that analyse data consistency, cross-verification of information, and identification of outliers or discrepancies. Regular system audits may help identify and rectify any inaccuracies or anomalies that may have been missed.
3. Verification and validation processes: Thorough verification and validation processes may be adopted for information displayed on company profiles and certifications. This may involve manual review by authorised personnel or authorities to ensure accuracy and legitimacy of information provided. Regular checks and validations may be conducted to address any potential errors or discrepancies.
4. Authority validation: Certifications may be validated against relevant authorities, regulatory bodies, or certification issuers to ensure accurate information and proper validation of certificates. Validation algorithms may be established to connect to authorities listing with these entities to report and rectify any inaccuracies promptly. Regular information updates from the authorities may help maintain the integrity of the data within the system.
5. Timely corrections and updates: Once anomalies or incorrect information are identified, prompt action may be taken to correct and update the relevant data. This may involve removing or amending inaccurate information, validating and re-verifying certificates, and ensuring the corrected data is reflected accurately within the system.
6. Communication and transparency: Open lines of communication with users and stakeholders may be maintained to address their concerns and provide updates on the actions taken to rectify anomalies or incorrect information. Any changes, corrections, or updates made to the system may be communicated to enhance trust and confidence among users.

Thus, the certifications ledgers and the certification ledgers application enable easy backtracking and reconciliation of historical certifications and accreditations of organisations such as maintenance organisation(s), maintenance personnel, suppliers and/or distributors. In other words, the certifications ledger may function as a trustworthy source for proving that at the time of a past repair, the organisation in change handling the repair (maintenance organisation) was allowed, certified, and/or accredited to perform the repair and the personal doing the repair was allowed and/or certified to perform the repair. Furthermore, as the certifications ledger may also contain information in relation to certificates of suppliers and/or distributors, it may also function as a trustworthy source for proving that the organisation selling and/or distributing the part is certified to sell and/or distribute.

In view of regulations requiring such organisation to possess appropriate certifications and accreditations, and the fact that such certifications and accreditations may have set periods of validity and expiration dates, the certifications ledger's data, in turn, may be used to determine the status of not only one or more components of a vehicle, but also the status of the vehicle as a whole. This may be particularly useful if the vehicle is an aircraft, as an aircraft part cannot be considered airworthy nor can be sellable if its owner cannot prove that the abovementioned regulatory requirements have been met.

As described above, the certifications ledger may enable information and/or certification history of one or more organisations to be retrieved. However, different organisations may have their own preferred systems for identifying the vehicle's components, therefore, the way the relevant parties refer to the vehicle's components may not be the identical. This may lead to multiple identifiers being associated with the same component of the vehicle, which may be problematic for systems such as the certifications ledger.

In order to address this issue, a unique identification number (UIN) aggregator may be provided. It will be understood that despite the term "unique identification number", a UIN may not solely made of a combination of numbers and may include other elements such as letter(s), character(s), and/or symbol(s). Furthermore, although the following discussion provides examples in which one or more UINs are used, it will be understood that the following teaching remains applicable even it one or more other types of unique identifiers are used. The UIN aggregator may identify individual components throughout their movements across owners, service providers, applications and platforms, and aggregates all existing UINs 904, 906 and assigns the aggregated set of UINs to the corresponding components, as shown in Figure 9. One or more UINs 904, 906 for the same component may, for example, be aggregated under a table structure, such as an exemplary UIN aggregator table shown in
Figure 9, including the one or more third party 904, 906, and the resulting table may be assigned to the component. The existing UINs that are included in the aggregated set of UINs may be one or more of: existing their party UIN(s) 906, the original part information and/or identifier(s) 904 such as part number, serial number and manufacturer number (e.g. cage code), part number (PNR), serial number (SER). A new UIN (e.g. SITA UIN 902 shown in

Figure 9) may be created and assigned to an aggregated set of UINs for easy identification of the aggregated set of UINs, in which case the aggregated set of UINs may be referred to by using the said new UIN 902. In the case that a table structure is used for aggregation, the said new UIN 902 may be added to the table structure.

Figure 10 shows an exemplary UIN aggregator process. As shown in

Figure 10, the UIN aggregator may first check 1002 if there is an existing UIN 902 for a component created by the UIN aggregator or administrator. For the purpose of the following discussion, such a UIN 902 will be referred to as "SITA UIN". If a SITA UIN 902 already exists for the component, the UIN aggregator may not create a new UIN 902. If there is no existing SITA UIN 902 for the component, the UIN aggregator may create 1004 a new SITA UIN 902.

Once the SITA UIN 902 has been created, the aggregator may assign 1006 all known existing parts data points 904, 906 to the SITA UIN. The part data points may include one or more of: existing UIN(s) (e.g. third party UIN(s)) 906, the original part information and/or identifier(s) 904 such as part number, serial number and manufacturer number (e.g. cage code), part number (PNR), serial number (SER).

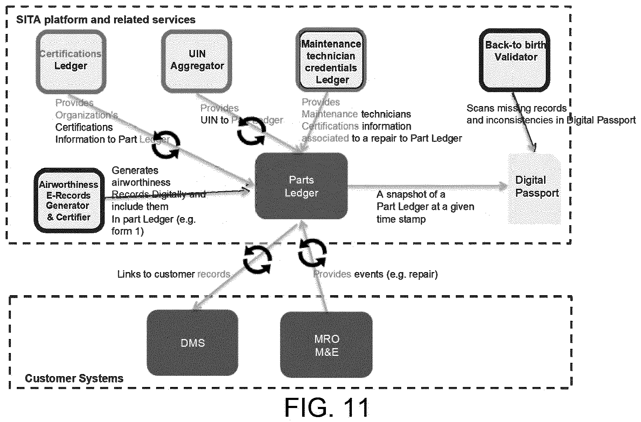

The SITA UIN 902 may be assigned 1008 to a parts ledger which is further described below in relation to
Figure 11 and

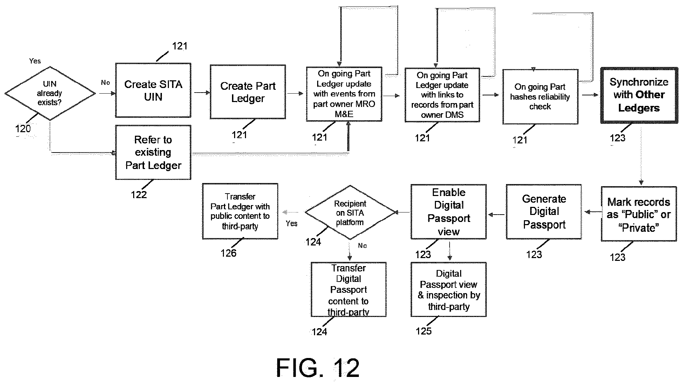

Figure 12, and the aggregated set of UIN including the SITA UIN is stored on the UIN aggregator. Thus, the UIN aggregator may function as a centralised UIN repository for the components of the vehicle.

The parts ledger may monitor 1010 the UIN throughout the component's lifecycle, which may include a plurality of stages such as manufacturing, distribution, installation, maintenance, and retirement. The parts ledger may also monitor existence of newly identified UINs and/or emergence of any new UINs throughout the component's lifecycle.

Creating SITA UINs 902 to identify serialised vehicle components (e.g. aircraft parts) offers advantages, such as:
- Uniqueness: Each serialised part of the vehicle is assigned a unique UIN ("SITA UIN") 902, ensuring that no two parts have the same identifier. This uniqueness helps eliminate costs and time loss due to managing confusion or errors related to identifying and tracking specific parts, especially in complex supply chains or maintenance operations.
- Traceability: The SITA UIN allows for precise and accurate traceability of serialised parts throughout their lifecycle. It enables stakeholders to track a part from its manufacturing origin to installation, maintenance, repair, and retirement. This traceability is vital for quality control, regulatory compliance, and safety purposes.
- Improved Inventory Management: The SITA UIN facilitates efficient inventory management by providing a distinct identifier for each part. It enables organisations to track part quantities, locations, and usage, aiding in inventory replenishment, stock rotation, and planning for maintenance or replacement.
- Enhanced Maintenance and Repairs: The SITA UIN enables comprehensive tracking of maintenance and repair activities for serialised parts. It helps maintenance crews and technicians quickly access relevant part information, such as repair history, service bulletins, or specific maintenance requirements, ensuring accurate and timely servicing of parts. It also helps on system integration for information exchange.
- Counterfeit Prevention: The SITA UIN can help combat counterfeiting or unauthorised part use. By validating the authenticity of the SITA UIN against a certified ledger or database, organisations can verify that the part comes from a trusted source and has not been tampered with or illegally replicated.
- Data Analytics and Decision-Making: The SITA UIN generates a wealth of data that can be leveraged for analytics and decision-making purposes. By analysing UIN-related data, organisations can gain insights into part performance, maintenance trends, failure rates, and other critical factors. This information helps optimise maintenance schedules, identify potential issues proactively, and improve operational efficiency.

Thus, the SITA UIN may bring improvements in the aspects of part identification, traceability, maintenance, and decision-making in the relevant sectors (e.g. aviation industry). In the aviation industry, in particular, this would lead to improved air worthiness and safety.

In relation to the certifications' ledger described above, the UIN aggregator allows requirements, historical transactions, and data (e.g. relating to the one or more physical conditions and/or the one or one or more regulations) associated with the same component but with different identifiers to be integrated. In other words, the UIN aggregator enables aggregation of the requirements, historical transactions and data by components, based on the known identifiers.

The certifications ledger and the UIN aggregators may be implemented in any suitable form, such as module(s) comprising database and processor(s) for running corresponding application(s). The certifications' ledger and the UIN aggregators may be communicatively connected with each other as well as one or more other parts of the system. In the example shown in Figure 1 and

Figure 11, the certifications ledger and UIN aggregator are communicatively connected via a parts ledger.

An aim of the parts ledger may be to provide a standardised way to continuously collect, store and display an immutable history of essential vehicle components (e.g. aircraft parts) information events during the components' life cycle. For this, the parts ledger may serve as a comprehensive information storage, containing details such as part number, serial number, manufacturer code, date of manufacture, and other relevant information. The parts ledger may also include data relating to installation of the components within a vehicle (e.g. an aircraft), as well as any parameters that may impact its life cycle.

Figure 12 shows an exemplary process of synchronisation between the parts ledger and other ledgers. In the example shown in
Figure 12, firstly, a part certifications ledger application verifies 1202 if a UIN is already assigned to a part and if its parts ledger exists. The parts ledger application may have access to parts ledgers of the vehicle's components which may be stored in a data storage. The parts ledgers appplication may be run on one or mroe processors included in and/or communicatively connected to the system. Such processor(s) may optionally be shared with other parts of the system, such as the UIN aggregator and the certifications ledger application described above. The interaction between the parts ledger application and the user may be performed via the web and/or app interface. Optionally, the same application may be used for the user to access the parts ledgers data as well as the certifications' ledgers data.

In the case that a UIN for the part does not already exists, a new UIN (SITA UIN) will be created 1210, as described above in relation to the UIN aggregator. A parts ledger is also created 1212 accordingly.

If a UIN already exists, it is likely that a parts ledger of the corresponding part also exists. This is because, as discussed in relation to
Figure 10 above, the SITA UIN 902 may have already been assigned to a parts ledger at step 1008. In such case, the existing parts ledger may be used 1220.

The parts ledger may undergo ongoing update 1214 with events from parties such as a part owner, MRO, and M&E. The events for the corresponding part may, for example, be retrieved from one or more MRO and/or M&E applications. The application may update the parts ledger continuously as per events occurring and throughout the corresponding part's lifecycle.

Similarly, the parts ledger may undergo ongoing update 1216 with records from parties such as the part owner and DMS. Adding records and events in the parts ledger may be carried out by creating a link between the parts ledger and the location where records are stored; and generating a hash to validate them. For example, when a record is added to an event in the parts ledger, a link may be created to establish a reference between the event and the associated record. The link may be used as connection point that allows easy access to the document within the Parts ledger, and the record may be stored in an external storage location, such as a DMS or cloud storage. In order to ensure integrity and authenticity of the added record in the parts ledger, a hash may be generated by the application. The hash may be a unique alphanumeric string that is computed using a cryptographic algorithm (e.g., SHA-256) applied to the content of the document or record. The hash value may be a fixed-length string that acts as a digital fingerprint of the record. This can ensure that even a minor change in the content will result in a different hash value.

Alongside the ongoing part ledger updates, the hash's reliability may be checked 1218 in an ongoing manner. For example, when a record needs to be validated or re-validated, the hash may be recalculated based on the current content of record. The recalculated hash may then be compared to the original hash stored in the parts ledger. If the two hashes match, the application may confirm that record has not been tampered nor modified since it was added to the part ledger. If the hashes do not match, the application may indicate that the record has been altered or corrupted, and its integrity cannot be verified. By creating links and generating hashes, the parts ledger application ensures traceability and integrity of added records. The link may establish a connection between the event and the record, allowing easy retrieval and reference. The hash may serve as a checksum, providing a mean to validate content of any digital passport that may be generated based on the data from the parts ledger, certifications ledger and UIN aggregators (e.g. by checking the digital passport's content's integrity and detecting any unauthorised modifications).

Thus, the method of adding documents or records using links and hashes as described above enhances the security and reliability of the part ledger. The method enables stakeholders to trust authenticity and unaltered state of the records, fostering transparency and compliance throughout the lifecycle of the aircraft parts.

The application may automatically reconcile 1230 the parts ledger with related organisations' certifications from the certifications' ledger. Records added to the parts ledger associated with an event that contain information about an organisation listed in the certifications ledger may allow the system to check if the organisation possessed valid certificates at the time the event occurred. The UIN aggregator may also be synced and/or updated 1230 with the parts ledger when an update relevant to the UIN aggregator occurs (e.g. an modification that changes the part number).

The application may allow a part owner to mark 1232 all of a part of information to be published in the digital passport as "public" or "private". The term "public" as used herein indicates that the corresponding information in the parts ledger can be made viewed externally with the owner's permission, and can be exported. On the other hand, the term "private" as used herein indicates that the corresponding information in the parts ledger cannot be viewed externally.

In order to make selected information of the digital passport visible by third parties, the parts ledger application may employ access control mechanisms and define different roles with specific permissions. Each parts ledger may be associated with an owner, who has certain privileges and control over the digital passport's information and its modification. The owner of the parts ledger may navigate through the user interface and select specific information (e.g. general details, such as part number and manufacturer code, and/or more specific data, such as maintenance records or repair information) they want to mark public and/or ready-for-export. The Parts ledger application may provide various export options to accommodate the needs of the owner. These options may include generating a printable PDF, creating a structured XML file, and/or generating a downloadable document package containing the selected information.

By following the process above, the parts ledger application may allow the owner to selectively export and share information with third parties while maintaining control over the privacy and security of the digital passport. The parts ledger application may, therefore, ensure that only the authorised information is shared, and any sensitive data is appropriately protected or redacted, providing a secure and controlled mechanism for information sharing.

At any given time, the owner may be able to export 1234 a "snapshot" of the parts ledger limited to information marked as "public" into a file. Such an snapshot may form or form a part of a digital passport 1234, and the digital passport may be timestamped.

The digital passport may, therefore, provide a snapshot of the parts ledger at a given time. The part owner may then choose to securely share the digital passport with one or more third-parties by, for example, email, file transfer, and/or any other suitable means.

Once the digital passport has been generated 1234 based on the snapshot of the parts ledger, one or more third-parties may review 1236 the exported information. The exported information may be provided in various formats, such as PDF or structured data. Thus, the third-parties may have access to the specific information shared by the owner, while any redacted or masked sensitive data (i.e. marked private) remains protected.

In order to ensure the integrity and authenticity of the exported digital passport information, the digital passport application may use digital signatures or hash verification. This allows third-parties to validate 1250 the authenticity of the exported data against original digital records.

The exported digital passport information may be ingest 1242 into the third-party's own system by following the process outlined below:
- Receipt of an exported Digital Passport: The third-party may receive the exported digital passport information from the part owner. The exported digital passport information may preferably be in a format that is compatible with the third party's system, requiring minimal or no transformation.
- Data mapping: The third-party enterprise application may map the fields or entities in the exported digital passport directly to the corresponding fields or entities in their own enterprise application. This ensures that the data is aligned and integrated seamlessly into third party enterprise application, without the need for extensive data extraction or transformation.
- Data validation: The third-party enterprise application may perform necessary validation checks on the ingested data from the digital passport to ensure its integrity and reliability. This may involve verifying the data against predefined rules, such as format validation, range checks, or consistency checks.
- Database Integration: The ingested digital passport information may be integrated into the third-party's enterprise database without significant modifications. The data may preferably be stored in a manner that aligns with the existing data structure and conventions of the third party's enterprise application.
- Verification and synchronisation: The third-party enterprise application may verify that the ingested data matches their expectations and is synchronised with their existing data or processes. This helps maintaining data consistency and accuracy as well as ensuring the integrated data is reliable for third-party usage.
- Ongoing Data Management: The third party may incorporate the ingested digital passport information into their regular data management practices, such as backup, updates, and data lifecycle management, to ensure the ongoing availability and reliability of the integrated data.

By following the process outlined above, the third-party can efficiently ingest 1242 the exported digital passport information into their own system. It will be evident to the skilled person in the art that the data ingestion and integration may need to be adapted depending on the third party's system capabilities, data requirements, and integration mechanisms.

If the third party is connected to a administrator's platform (e.g. "SITA platform" as shown in
Figure 12) and uses the parts ledger, the third party may receive 1260 the ledger with its public content and/or continue updating the content.

Thus, the parts ledger obviates the needs for manual reconciliation of parts information and supplier validation information. The parts ledger may be used to flag missing certificates, which may be particularly beneficial prior to change of ownership.

In relation to maintenance organisation(s), the parts ledger application validates records such as Authorised Release Certificate (ARC) (e.g. EASA Form 1, FAA 8130, ...) issued by maintenance organisations against a repository of certified maintenance organisations known by the certifications ledger.

As described above the certifications' ledger stores relevant information, such as Part 145 certification issued by the FAA for aircraft repair station operators, and other credentials of maintenance organisations proving their regulatory compliance at the time of a repair. This may include the rating as well as the scope of work.

The parts ledger application may have a function for ARC validation to ensure that records issued by the maintenance organisations are authenticated and verified against the certifications' ledger. The certifications ledger may act as a repository of trusted and certified maintenance organisations, and include their certifications, accreditation and authorisation details.

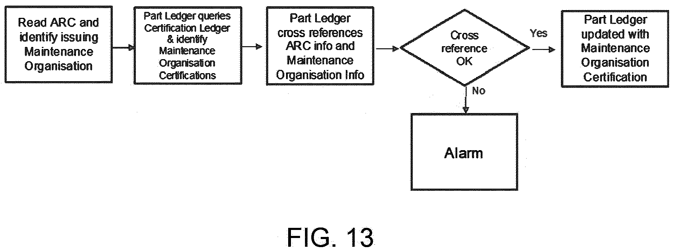

Figure 13 illustrates an exemplary process of associating a maintenance organisation's certifications with the parts ledger. As shown in
Figure 13, when an ARC (e.g. EASA Form 1, FAA 8130,...) is included in the parts ledger, the application may automatically initiate the validation process. The application may link the maintenance organisations with the issued the documents (e.g. the Part 145 certification or other relevant certifications). This information may be retrieved from the certifications' ledger.

The validation process may involve a step of querying the certifications ledger using the maintenance organisation's unique identifier or other identifying information.

The parts ledger application may retrieve and cross-references the maintenance organisation's who issued document, checking for their validity and ensuring that they were authorised at the time of the repair.

If the maintenance organisation's ARC matches the entry in the certifications ledger and are valid, the ARC document may be marked as authenticated and accepted. Then, the parts ledger may be updated with the relevant maintenance event details, including the ARC and the refence to the certification of the maintenance organisation (e.g. part 145, ratings, and scope of work).

In the case that the maintenance organisation's credentials cannot be verified or do not match the information in the certifications' ledger, the parts ledger application may flag the ARC document as "not validated" and generates an alarm.

This capability provides an additional layer of assurance and compliance by validating the maintenance organisations' authorisation status at the time of the repair. This, in turn, helps to maintain a high-level trust in the parts ledger by validating the records against a valid source, such as the certifications ledger. The automated verification process described above may be particularly useful for handling parts data for multiple vehicles and/or for vehicles that have high number of parts (e.g. aircraft).

Furthermore, the parts ledger application may generate a notification if it is determined, based on the data from one or more of the parts ledgers, that:
- one or more components of the vehicle currently do not comply with one or more of the requirements associated with the at least one of the components; and/or
- one or more components of the vehicle, after a predetermined period of time (which may be set by a relevant party (e.g. part owner, aircraft owner, application administrator)), are expected to become non-compliant with one or more of the requirements associated with the at least one of the corresponding components.

The notification may indicate that the corresponding component(s) do not currently meet the requirements and/or will become non-compliant with the requirements. Therefore, the notification may include one or more of the identifiers associated with the corresponding component(s). For example, the notification may include SITA UIN(s) associated with the corresponding component(s).

Such current or anticipated non-compliance with the requirements, for an aircraft component, may indicate that the component is not airworthy. Furthermore, depending on the function and importance of the non-compliant part, an assembly including such a non-compliant part, or the entire aircraft may be deemed not airworthy.

The notification my further include one or more actions that need to be taken to meet the requirements and/or parti(es) in charge of performing the actions. The notifications generated may be viewed on the application and/or be sent to more users associated with an owner of the vehicle, an operator of the vehicle, and/or one or more organisations that are in charge of: manufacturing, distribution, inspection, maintenance and/or repair of the corresponding component(s). It will be understood that such notifications and the notifications described below in relation to back-to-birth validator may be sent via any suitable method, such as e-mail, SMS, and push notification.

In view of that vehicles are typically made of multiple assemblies that are each made of multiple parts, it may be advantageous to scan digital passports associated with multiple parts. For example, scanning digital passports of all parts of an assembly may be useful for evaluating the status of the said assembly. For such scanning, a "back-to-birth validator" algorithm may be used. A back-to-birth validator refers to an algorithm scanning a tree of digital passports of an entire assembly. Optionally, one or more alerts on possible non-compliance (e.g. airworthiness non-compliance for aircraft parts), missing documents and/or missing certifications of one or more parts within the assembly may be generated.

Figure 14 illustrates an exemplary passport tree of an engine comprising a gas turbine, blade, exhaust frame assembly as sub-parts, and
Figure 15 illustrates an exemplary process of back-to-birth validator scanning. As shown in
Figure 15,

The back-to-birth validator application may check all parts ledgers in the assembly have required records. Records that need to be tracked for the parts from a back-to-birth perspective may be defined by the user and/or be specified in relevant regulations. Optionally, one or more of the certifications ledger application, UIN aggregator, parts ledger application, and the back-to-birth validator application may be the same application. In the cases that at least one of the certifications ledger application, UIN aggregator, parts ledger application, and the back-to-birth validator application has its own application, the applications may be communicatively connected in order to enable access to one or more functions and/or data from each other. If not all records for the corresponding parts are present in their parts ledger, a notification may be generated.

Similarly, the back-to-birth validator application may check all parts ledgers in the assembly have required events. Events that need to be tracked for the parts from a back-to-birth perspective may be defined by the user and/or be specified in relevant regulations. If not all events for the corresponding parts are present in their parts ledger, a notification may be generated.

The application may also check if all certifications' ledgers in the assembly have required certifications (i.e. all references of current and past distributors, manufacturer, maintenance organisations). If not all certificates for the corresponding parts are present in their certifications' ledger, a notification may be generated.

The application may also check if the maintenance organisations' maintenance activities where conducted as per relevant ratings and scope of work. If not, a notification may be generated.

For life-limited parts, cycles information tracking is mandatory for life. As used herein, the term "life-limited parts" means any parts for which a mandatory replacement limit is specified in the type design, the Instructions for Continued Airworthiness, or the maintenance manual. Such cycles information may be retrieved from, for example, a customer's MRO M&E but also from different internal data sources of the administrator (e.g. SITA) such as ACARS, ADSB etc. Therefore, the application may aggregate the different sources of cycle information. If inconsistency is detected, a notification may be generated.

At the end for all checks, the application may generate an executive summary indicating a level or criticality in terms of missing back to birth information as well as inconsistencies detected.

One or more of the abovementioned notifications may optionally be sent to one or more of: an owner of the vehicle and/or the corresponding component, an operator of the vehicle, and/or one or more organisations that are in charge of: manufacturing, distribution, inspection, maintenance and/or repair of the corresponding components.

Thus, the back-to-birth validator application provides an automated method for evaluating vehicles assemblies' status and/or conditions (e.g. airworthiness of aircraft components). This not only obviates the needs for manual verification, but also reduces risks for assembly quarantine. The back-to-birth validator may be particularly useful, for validating an aircraft's parts assemblies (e.g. engine, auxiliary power unit, landing gear) as they can comprise 1000' of sub parts out of which some are life-limited parts subject to air worthiness regulations. Furthermore, in the field of aviation, all sub-parts of an assembly must be individually airworthy to be allowed to trade or install the assembly.

Furthermore, it will be appreciated that the back-to-birth validator application may be used to identify any potential deficiencies and/or non-compliance that requires attention based on the current data available from the ledgers. Such potential deficiencies and/or non-compliance may also be communicated to relevant parties in forms of notifications. Such notifications may include any actions required to avoid deficiencies and/or non-compliance and the date by which the actions need to be performed.

The term "processor" or "processing means" as used herein means one or more processing devices, apparatus, programs, circuits, components, systems and subsystems, whether implemented in hardware, software or both, and whether or not programmable. The term "processor" or "processing means" as used herein includes, but is not limited to one or more computers, hardwired circuits, signal modifying devices and systems, devices and machines for controlling systems, central processing units, programmable devices and systems, field programmable gate arrays, application specific integrated circuits, systems on a chip, systems comprised of discrete elements and/or circuits, state machines, virtual machines, data processors, processing facilities and combinations of any of the foregoing.

The terms "storage", "storage means", "storage medium" or "data storage" as used herein mean one or more data storage devices, apparatus, programs, circuits, components, systems, subsystems and storage media serving to retain data, whether on a temporary or permanent basis, and to provide such retained data.

One or more of the application, interface, database, modules and/or services described herein may be built using any platform known to the skilled person, such as Microsoft AZURE, Amazon Web Services, cloud platform, IBM cloud platform, or Google cloud platform. It will also be appreciated that one or more of the functionalities described herein may be implemented in any programming language, for example, html 5, C++^{™}, JAVA^{™}, and .xml may be used as well as other programming languages which will be known to the skilled person.

The following numbered clauses are hereby included to give further description of the invention:
1. A method for monitoring status of one or more components of a vehicle comprising:
   retrieving one or more known identifiers associated with each of the one or more components of the vehicle;
   retrieving one or more requirements in relation to one or more physical conditions and/or one or more regulations associated with each of the identifiers;
   retrieving historical data relating to the one or more physical conditions and/or the one or one or more regulations associated with each of the identifiers;
   aggregating the requirements and the historical data by components based on the known identifiers to form one or more sets of aggregated historical data, wherein each of the one or more sets of the aggregated historical data having the historical data associated with one of the one or more components of the vehicle; and
   determining, based on the one or more sets of the aggregated historical data associated with each of the components, if the each of the components meets the requirements associated with the each of the components.
2. The method of clause 1, wherein if it is determined that at least one of the components currently do not meet one or more of the requirements associated with the at least one of the components, generating a notification indicating that the at least one of the components do not meet the one or more of the requirements.
3. The method of clauses 1 or 2, wherein if it is determined that at least one of the components are expected to no longer meet one or more of the requirements associated with the at least one of the components within a predetermined period of time, generating a notification indicating that the at least one of the components are expected to become non-compliant with the one or more of the requirements.
4. The method of any of clauses 2 or 3, wherein the notification comprises one or more of the identifiers of the at least one of the components that do not, or are expected not to meet the one or more of the requirements associated with the at least one of the components.
5. The method of any of the preceding clauses, wherein the requirements comprises one or more certifications that one or more organisations that perform manufacturing, distribution, inspection, maintenance and/or repair for the corresponding components are required to validly possess at the time of performing the manufacturing, distribution, inspection, maintenance, and/or repair.
6. The method of any of the preceding clauses, wherein the requirements comprises one or more of parameter(s) relating to one or more physical condition(s), lifespan and/or predetermined cycles of inspection, maintenance, and/or repair of the corresponding component(s).
7. The method of clause any of the preceding clauses, wherein the requirements comprises one or more of parameter(s) relating to one or more of inspection, maintenance, and/or repair that need to be performed in response to one or more events affecting the physical conditions of the corresponding component(s).
8. The method of clause 7, wherein the one or more events affecting the physical conditions are one or more of: reported failure(s), defect(s), and/or malfunctioning of the corresponding component(s), and incidents that may cause failure(s), defect(s), and/or malfunctioning of the corresponding component(s).
9. The method of any of the preceding clauses, wherein the historical data comprises data relating to time(s) that one or more of manufacturing, distribution, inspection, maintenance and/or repair have been performed for the corresponding components.
10. The method of any of the preceding clauses, wherein the historical data comprises data relating to one or more certifications held by the organisation that performed one or more of manufacturing, distribution, inspection, maintenance and/or repair for the corresponding components.
11. The method of clause 10, wherein the data relating to each of the certifications comprises: a name of the organisation to which the corresponding certification is issued, a name of entity by which the corresponding certification is issued, a time period during which the corresponding certification is valid, and details relating to one or more of manufacturing, distribution, inspection, maintenance and/or repair that the organisation is certified to perform on the corresponding components.
12. The method of any of the preceding clauses, wherein the historical data comprises details relating to past transactions of the corresponding components.
13. The method of any of the preceding clauses, wherein a new unique identifier is assigned to each group of the aggregated identifiers, the each group being made of identifiers associated with the same component.
14. The method of any of the preceding clauses, wherein the one or more known identifiers comprises identifier(s) issued and/or used by one or more of: manufacturer(s), operator(s), and organisations that are in charge of: manufacturing, distribution, inspection, maintenance and/or repair of the corresponding component(s).
15. The method of any of the preceding clauses, further comprising:
   sending the notification to one or more of: an owner of the vehicle, an operator of the vehicle, and/or one or more organisations that are in charge of: manufacturing, distribution, inspection, maintenance and/or repair of the corresponding component(s).
16. The method of clause 16, wherein, one or more of the certifications are retrieved from a database, wherein the database is configured to allow one or more of the organisations to upload, modify, and/or delete one of more certifications they hold.
17. The method of any of the preceding clauses, further comprising:
   if it is determined that all of the requirements of all components of an assembly are currently met, issuing a proof certifying that the assembly is suitable for operation, the assembly being a part of the vehicle and comprising the all components of the assembly.
18. The method of any of clauses 1 to 16, further comprising:
   if it is determined that all of the requirements of all components of the vehicle are currently met, issuing a proof certifying that the vehicle is suitable for operation.
19. The method of any of the preceding clauses, wherein the vehicle is an aircraft.
20. The method of clause 19, further comprising:
   if it is determined that all of the requirements of all components of an assembly are currently met, issuing a proof certifying that the aircraft is airworthy, the assembly being a part of the aircraft and comprising the all components of the assembly.
21. The method of clause 19, further comprising:
   if it is determined that all of the requirements of all components of the aircraft are currently met, issuing a proof certifying that the aircraft is airworthy.
22. The method of clause 19, wherein if it is determined that one or more of essential components of the aircraft or an assembly of the aircraft do not, or are expected not to meet one or more of essential requirements associated with the essential components, generating an alert indicating that the aircraft or the assembly is not airworthy,
   wherein the one or more essential components and the one or more essential requirements are determined based on one or more inputs from one or more users associated with:
   owner(s) of the aircraft, the assembly and/or the corresponding essential components, an operator of the aircraft, and/or
   one or more organisations that are in charge of: manufacturing, distribution, inspection, maintenance and/or repair of the aircraft, the assembly and/or the corresponding essential components.
23. The method of clause 22, wherein the alert comprises one or more of the identifiers of the one or more of the essential components that do not, or are expected not to meet the one or more of the essential requirements within a predetermined time.
24. A method for monitoring status of one or more components of a vehicle comprising:
   retrieving one or more known identifiers associated with each of the one or more components of the vehicle;
   retrieving one or more requirements in relation to one or more physical conditions and/or one or more regulations associated with each of the identifiers;
   retrieving historical data relating to the one or more physical conditions and/or the one or one or more regulations associated with each of the identifiers;
   aggregating the requirements and the historical data by components based on the known identifiers to form one or more sets of aggregated historical data, wherein each of the one or more sets of the aggregated historical data having the historical data associated with one of the one or more components of the vehicle;
   determining, based on the one or more sets of the aggregated historical data associated with each of the components, if the each of the components meets the requirements associated with the each of the components; and
   if it is determined that at least one of the components currently do not meet one or more of the requirements associated with the at least one of the components, and/or that at least one of the components are expected to no longer meet one or more of the requirements associated with the at least one of the components within a predetermined period of time, generating a notification indicating that the at least one of the components do not meet the one or more of the requirements,
   wherein the notification comprises one or more of the identifiers of the at least one of the components that do not, or are expected not to meet the one or more of the requirements associated with the at least one of the components.
25. A system for monitoring status of one or more components of a vehicle comprising a data storage and a processor, the data storage comprising a computer program stored thereon and the processor being configured to run the computer program, wherein the computer program is configured to perform the method according to any of clauses 1 to 24.

## Claims

**1.** A method for monitoring status of one or more components of a vehicle comprising:
retrieving one or more known identifiers associated with each of the one or more components of the vehicle;
retrieving one or more requirements in relation to one or more physical conditions and/or one or more regulations associated with each of the identifiers;
retrieving historical data relating to the one or more physical conditions and/or the one or one or more regulations associated with each of the identifiers;
aggregating the requirements and the historical data by components based on the known identifiers to form one or more sets of aggregated historical data, wherein each of the one or more sets of the aggregated historical data having the historical data associated with one of the one or more components of the vehicle; and
determining, based on the one or more sets of the aggregated historical data associated with each of the components, if the each of the components meets the requirements associated with the each of the components.

**2.** The method of claim 1, wherein if it is determined that at least one of the components currently do not meet one or more of the requirements associated with the at least one of the components, generating a notification indicating that the at least one of the components do not meet the one or more of the requirements; and/or
wherein if it is determined that at least one of the components are expected to no longer meet one or more of the requirements associated with the at least one of the components within a predetermined period of time, generating a notification indicating that the at least one of the components are expected to become non-compliant with the one or more of the requirements.

**3.** The method of any of claim 2, wherein the notification comprises one or more of the identifiers of the at least one of the components that do not, or are expected not to meet the one or more of the requirements associated with the at least one of the components.

**4.** The method of any of the preceding claims, wherein the requirements comprises one or more certifications that one or more organisations that perform manufacturing, distribution, inspection, maintenance and/or repair for the corresponding components are required to validly possess at the time of performing the manufacturing, distribution, inspection, maintenance, and/or repair; and/or
wherein the requirements comprises one or more of parameter(s) relating to one or more physical condition(s), lifespan and/or predetermined cycles of inspection, maintenance, and/or repair of the corresponding component(s).

**5.** The method of claim any of the preceding claims, wherein the requirements comprises one or more of parameter(s) relating to one or more of inspection, maintenance, and/or repair that need to be performed in response to one or more events affecting the physical conditions of the corresponding component(s),
preferably wherein the one or more events affecting the physical conditions are one or more of: reported failure(s), defect(s), and/or malfunctioning of the corresponding component(s), and incidents that may cause failure(s), defect(s), and/or malfunctioning of the corresponding component(s).

**6.** The method of any of the preceding claims, wherein the historical data comprises data relating to time(s) that one or more of manufacturing, distribution, inspection, maintenance and/or repair have been performed for the corresponding components.

**7.** The method of any of the preceding claims, wherein the historical data comprises data relating to one or more certifications held by the organisation that performed one or more of manufacturing, distribution, inspection, maintenance and/or repair for the corresponding components,
preferably wherein the data relating to each of the certifications comprises: a name of the organisation to which the corresponding certification is issued, a name of entity by which the corresponding certification is issued, a time period during which the corresponding certification is valid, and details relating to one or more of manufacturing, distribution, inspection, maintenance and/or repair that the organisation is certified to perform on the corresponding components.

**8.** The method of any of the preceding claims, wherein the historical data comprises details relating to past transactions of the corresponding components; and/or
wherein a new unique identifier is assigned to each group of the aggregated identifiers, the each group being made of identifiers associated with the same component; and/or
wherein the one or more known identifiers comprises identifier(s) issued and/or used by one or more of: manufacturer(s), operator(s), and organisations that are in charge of: manufacturing, distribution, inspection, maintenance and/or repair of the corresponding component(s).

**9.** The method of any of the preceding claims, further comprising:
sending the notification to one or more of: an owner of the vehicle, an operator of the vehicle, and/or one or more organisations that are in charge of: manufacturing, distribution, inspection, maintenance and/or repair of the corresponding component(s), preferably wherein one or more of the certifications are retrieved from a database, wherein the database is configured to allow one or more of the organisations to upload, modify, and/or delete one of more certifications they hold.

**10.** The method of any of the preceding claims, further comprising:
if it is determined that all of the requirements of all components of an assembly are currently met, issuing a proof certifying that the assembly is suitable for operation, the assembly being a part of the vehicle and comprising the all components of the assembly; or
further comprising:
if it is determined that all of the requirements of all components of the vehicle are currently met, issuing a proof certifying that the vehicle is suitable for operation.

**11.** The method of any of the preceding claims, wherein the vehicle is an aircraft.

**12.** The method of claim 11, further comprising:
if it is determined that all of the requirements of all components of an assembly are currently met, issuing a proof certifying that the aircraft is airworthy, the assembly being a part of the aircraft and comprising the all components of the assembly; or
further comprising:
if it is determined that all of the requirements of all components of the aircraft are currently met, issuing a proof certifying that the aircraft is airworthy; or
if it is determined that one or more of essential components of the aircraft or an assembly of the aircraft do not, or are expected not to meet one or more of essential requirements associated with the essential components, generating an alert indicating that the aircraft or the assembly is not airworthy,
wherein the one or more essential components and the one or more essential requirements are determined based on one or more inputs from one or more users associated with:
owner(s) of the aircraft, the assembly and/or the corresponding essential components,
an operator of the aircraft, and/or
one or more organisations that are in charge of: manufacturing, distribution, inspection, maintenance and/or repair of the aircraft, the assembly and/or the corresponding essential components,
preferably wherein the alert comprises one or more of the identifiers of the one or more of the essential components that do not, or are expected not to meet the one or more of the essential requirements within a predetermined time.

**13.** A method for monitoring status of one or more components of a vehicle comprising:
retrieving one or more known identifiers associated with each of the one or more components of the vehicle;
retrieving one or more requirements in relation to one or more physical conditions and/or one or more regulations associated with each of the identifiers;
retrieving historical data relating to the one or more physical conditions and/or the one or one or more regulations associated with each of the identifiers;
aggregating the requirements and the historical data by components based on the known identifiers to form one or more sets of aggregated historical data, wherein each of the one or more sets of the aggregated historical data having the historical data associated with one of the one or more components of the vehicle;
determining, based on the one or more sets of the aggregated historical data associated with each of the components, if the each of the components meets the requirements associated with the each of the components; and
if it is determined that at least one of the components currently do not meet one or more of the requirements associated with the at least one of the components, and/or that at least one of the components are expected to no longer meet one or more of the requirements associated with the at least one of the components within a predetermined period of time, generating a notification indicating that the at least one of the components do not meet the one or more of the requirements,
wherein the notification comprises one or more of the identifiers of the at least one of the components that do not, or are expected not to meet the one or more of the requirements associated with the at least one of the components.

**15.** A system for monitoring status of one or more components of a vehicle comprising a data storage and a processor, the data storage comprising a computer program stored thereon and the processor being configured to run the computer program, wherein the computer program is configured to perform the method according to any of claims 1 to 14.
